# DEMANDE DE BREVET EUROPEEN

(11) **EP 3 470 592 A1**
(43) Date de publication de la demande: **17.04.2019**
(21) Numéro de dépôt: 17196306.9
(22) Date de dépôt: 13.10.2017
(51) Int. Cl.: E04B 1/84, C03B 37/04

(54) **PANNEAU ACOUSTIQUE EN LAINE DE VERRE ET PROCEDE DE FABRICATION D'UN TEL PANNEAU**

(71) Demandeur: Saint-Gobain Isover, 92400 Courbevoie (FR); Saint-Gobain Placo, 92150 Suresnes (FR)
(72) Inventeur: JACQUS, Gary, 75018 Paris (FR); BERGER, Sylvain, 75018 Paris (FR); LEROY, Pierre, 60370 Saint Félix (FR); NILSSON, Erling, 224 72 Lund (SE); DRAY, Delphine, 93500 Pantin (FR)
(74) Mandataire: Saint-Gobain Recherche

(57) **Abrégé**

L'invention concerne un panneau en laine de verre destiné à être utilisé comme panneau acoustique et présentant :
- une densité inférieure ou égale à 130 kg/m³,
- une résistivité à l'écoulement d'air comprise entre 30 et 120 kPa.s/m²,
- un module d'Young compris entre 0,5 et 4 MPa.

L'invention permet de proposer un panneau « léger » avec de bonnes propriétés d'absorption et d'isolation acoustiques.

## Description

L'invention concerne un panneau en laine de verre destiné à être utilisé comme panneau acoustique, par exemple dans un système de plafond suspendu.

Il est connu sur le marché des panneaux acoustiques de plafond permettant de combiner à la fois performance d'absorption et d'isolation. Toutefois, ces panneaux, par exemple en laine de roche ou associant une laine minérale avec une plaque de plâtre, sont généralement très lourds. Ils sont donc difficiles à manipuler pour les installateurs. De plus, du fait de leur poids, des contraintes s'appliquent sur les structures de plafond supportant les panneaux acoustiques.

Il y a donc un besoin pour des panneaux « légers » permettant d'associer un niveau de performances élevé à la fois en absorption acoustique et en isolation acoustique.

Pour cela, l'invention propose un panneau en laine de verre destiné à être utilisé comme panneau acoustique et présentant :
- une densité inférieure ou égale à 130 kg/m³, de préférence inférieure ou égale à 120 kg/m³, voire inférieure ou égale à 110 kg/m³, ou encore inférieure ou égale à 100 kg/m³,
- une résistivité à l'écoulement d'air comprise entre 30 et 120 kPa.s/m², de préférence entre 50 et 110 kPa.s/m², voire entre 50 et 100 kPa.s/m², ou encore entre 50 et 90 kPa.s/m², voire entre 50 et 80 kPa.s/m², et
- un module d'Young compris entre 0,5 et 4 MPa, de préférence entre 0,8 et 4 MPa, de façon encore plus préférée entre 1,2 MPa et 4 MPa, voire entre 1,5 MPa et 4 MPa, ou encore entre 2 MPa et 4 M Pa.

Selon une autre particularité, le panneau présente en outre un micronaire compris entre 2,5/5g et 6/5g, de préférence entre 3/5g et 6/5g, voire entre 3,5/5g et 6/5g, ou encore entre 4/5g et 5/5g.

Selon une autre particularité, le panneau présente en outre une épaisseur supérieure ou égale à 25 mm, voire supérieure ou égale à 30 mm, de préférence supérieure ou égale à 35 mm, voire supérieure ou égale à 40 mm, ou encore supérieure ou égale à 45 mm.

Selon une autre particularité, le panneau comprend en outre, sur chacune de ses faces principales, un voile.

Selon une autre particularité, le voile destiné à être tourné du côté d'où provient le son à amortir ayant une résistance spécifique à l'écoulement d'air inférieure ou égale à 1 kPa.s/m, de préférence inférieure ou égale à 0,5 kPa.s/m, et le voile opposé ayant une résistance spécifique à l'écoulement d'air supérieure ou égale à 1 kPa.s/m, de préférence supérieure ou égal 5 kPa.s/m, voire supérieure ou égale à 10 kPa.s/m, ou encore étanche à l'air.

Selon une autre particularité, le panneau comprend un taux massique de liant compris entre 5% et 15% de la masse totale, de préférence entre 6% et 10% de la masse totale.

Selon une autre particularité, le panneau présente une absorption acoustique α_{W} supérieure ou égale à 0,9.

Selon une autre particularité, le panneau présente une isolation acoustique D_{nfw} supérieure ou égale à 38 dB, de préférence supérieure ou égale à 39 dB, voire supérieure ou égale à 40 dB, ou encore supérieure ou égale à 41 dB, voire supérieure ou égale à 42 dB.

L'invention concerne également un procédé de fabrication du panneau en laine de verre tel que décrit ci-dessus, comprenant les étapes suivantes :
- fabrication d'un mat de fibres de verre par centrifugation interne, à l'aide d'une installation comportant :
   ∘ au moins un centrifugeur apte à tourner autour d'un axe X, notamment vertical, et dont la bande périphérique est percée d'une pluralité d'orifices pour délivrer des filaments d'un matériau fondu,
   ∘ un moyen d'étirage gazeux à haute température sous forme d'un brûleur annulaire qui assure l'étirage des filaments en fibres, et
   ∘ un tapis de réception associé à des moyens d'aspiration pour réceptionner les fibres,
- crêpage du mat de fibres de verre avec un taux de crêpage compris entre 1,5 et 5, de préférence entre 2 et 5, voire entre 2,5 et 5, ou encore entre 3 et 5.

Selon une autre particularité, pendant l'étape de fabrication du mat de fibres de verre, une combinaison de paramètres est réglée parmi au moins :
∘ la viscosité du verre fondu, qui est comprise entre 820 et 1500 poise, de préférence entre 950 et 1200 poise,
∘ la pression du brûleur, comprise entre 200 et 1000 mm CE, de préférence entre 200 et 600 mm CE,
∘ la tirée totale de verre par jour et par centrifugeur, qui est comprise entre 14 tonnes/jour et 23 tonnes/jour, de préférence entre 17 et 22 tonnes/jour,
∘ le nombre de trous de chaque centrifugeur qui est compris entre 5000 et 40000, de préférence entre 15000 et 35000, et
∘ la vitesse de rotation du centrifugeur à une vitesse supérieure à 2000 tours/minute.

Selon une autre particularité, le diamètre des orifices de chaque centrifugeur est compris entre 0,5 et 1,1 mm.

Selon une autre particularité, chaque centrifugeur présente un diamètre compris entre 200 et 800 mm.

Selon une autre particularité, du liant est projeté sur les fibres de verre avant qu'elles ne tombent sur le tapis de réception, avec un taux compris entre 5% et 15% de la masse totale, de préférence entre 6% et 10% de la masse totale, le mat de fibres de verre étant passé en étuve, de préférence après crêpage, afin de polymériser le liant.

Selon une autre particularité, un voile est collé sur chacune des faces principales du panneau en laine de verre.

L'invention concerne un panneau en laine de verre destiné à être utilisé comme panneau acoustique et présentant :
- une densité inférieure ou égale à 130 kg/m³, de préférence inférieure ou égale à 120 kg/m³, voire inférieure ou égale à 110 kg/m³, ou encore inférieure ou égale à 100 kg/m³,
- une résistivité à l'écoulement d'air comprise entre 30 et 120 kPa.s/m², de préférence entre 50 et 110 kPa.s/m², voire entre 50 et 100 kPa.s/m², ou encore entre 50 et 90 kPa.s/m², voire entre 50 et 80 kPa.s/m², et
- un module d'Young compris entre 0,5 et 4MPa, de préférence entre 0,8 et 4 MPa, de façon encore plus préférée entre 1,2 MPa et 4 MPa, voire entre 1,5 MPa et 4MPa, ou encore entre 2 MPa et 4 MPa.

Le panneau selon l'invention, avec une densité de 130 kg/m³ au maximum, est dit « léger ». Ses propriétés acoustiques (résistivité à l'écoulement d'air et module d'Young) en font un candidat idéal pour une utilisation comme panneau acoustique. Plus le panneau est léger, plus il est facilement manipulable et moins il applique de contraintes sur la structure qui le supporte.

Parallèlement, le panneau comporte des propriétés acoustiques très intéressantes grâce à une faible résistivité à l'écoulement d'air (comprise entre 30 et 120 kPa.s/m², de préférence entre 50 et 110 kPa.s/m², voire entre 50 et 100 kPa.s/m², ou encore entre 50 et 90 kPa.s/m², voire entre 50 et 80 kPa.s/m²) et à un module d'Young élevé (compris entre 0,5 et 4 MPa, de préférence entre 0,8 et 4 MPa, de façon encore plus préférée entre 1,2 MPa et 4 MPa, voire entre 1,5 MPa et 4 MPa, ou encore entre 2 MPa et 4 MPa). En effet, dans les gammes mentionnées ci-dessus, plus la résistivité à l'écoulement d'air est faible, meilleure est l'absorption acoustique et, plus le module d'Young est élevé, meilleure est l'isolation acoustique.

La mesure de la résistivité à l'écoulement d'air est réalisée selon la norme ISO 9053.

La mesure du module d'Young est réalisée selon la norme ISO 18437 et selon l'article de C. Langlois, R. Panneton et N. Atalla : Polynomial relations for quasi-static mechanical characterization of isotropic poroelastic materials, J. Acoust. Soc. Am., 110:3032-3040, 2001.

Les mesures de la résistivité à l'écoulement d'air et du module d'Young sont réalisées sur le panneau sans les voiles avant/arrière.

Ce panneau en laine de verre est obtenu par fibrage par centrifugation interne puis par crêpage des fibres de verre à un taux de crêpage compris entre 1,5 et 5. Le taux de crêpage qui a une influence sur la résistivité à l'écoulement d'air et sur le module d'Young. Le taux de crêpage est de préférence entre 2 et 5, voire entre 2,5 et 5, ou encore entre 3 et 5 pour diminuer encore la résistivité à l'écoulement d'air et augmenter le module d'Young. En effet, le crêpage favorise l'orientation des fibres selon une direction perpendiculaire Z aux faces principales du panneau : plus le taux de crêpage est élevé, plus l'orientation des fibres selon Z est importante et plus la résistivité à l'écoulement d'air est diminuée et le module d'Young augmenté.

Le panneau en laine de verre présente en outre un micronaire compris entre 2,5/5g et 6/5g. De préférence, le micronaire est compris entre 3/5g et 6/5g, voire entre 3,5/5g et 6/5g, ou encore entre 4/5g et 5/5g. En effet, plus le micronaire augmente, plus la résistivité à l'écoulement d'air diminue.

Le micronaire est représentatif de la finesse des fibres. La mesure du micronaire rend compte de la surface spécifique grâce à la mesure de la perte de charge aérodynamique lorsqu'une quantité donnée de fibres extraites d'un matelas non ensimé est soumise à une pression donnée d'un gaz - en général de l'air ou de l'azote. Cette mesure est usuelle dans les unités de production de fibres minérales, elle est réalisée selon la norme DIN 53941 ou ASTM D 1448 et utilise un appareil dit "appareil micronaire ".

Le panneau en laine de verre présente en outre une épaisseur supérieure ou égale à 25 mm, voire supérieure ou égale à 30 mm, de préférence supérieure ou égale à 35 mm, voire supérieure ou égale à 40 mm, ou encore supérieure ou égale à 45 mm. En effet, plus la densité du panneau diminue, plus il est préférable d'avoir une épaisseur qui augmente pour conserver une densité surfacique satisfaisante. La densité surfacique, ou grammage, est de préférence comprise entre 4 et 6,5 kg/m².

De façon optionnelle, le panneau en laine de verre peut être découpé dans l'épaisseur selon un plan sensiblement parallèle à ses faces principales. Dans cette configuration, l'épaisseur du panneau de laine de verre avant découpe est donc supérieure ou égale à 60 mm, de préférence supérieure ou égale à 70 mm, voire supérieure ou égale à 80 mm.

Toutefois, de préférence, le panneau en laine de verre n'est pas coupé dans l'épaisseur selon un plan sensiblement parallèle à ses faces principales

Le panneau en laine de verre présente en outre un voile sur chacune de ses faces principales. Le voile destiné à être tourné du côté d'où provient le son à amortir, dit voile avant, a une résistance au spécifique à l'écoulement d'air inférieure ou égale à 1 kPa.s/m, de préférence inférieure ou égal 0,5 kPa.s/m, de façon à laisser passer au maximum le son vers la laine de verre, qui va amortir le son pour permettre une bonne absorption acoustique. Le voile opposé, dit voile arrière, a une résistance spécifique à l'écoulement d'air supérieure ou égale à 1 kPa.s/m, de préférence supérieure ou égal 5 kPa.s/m, voire supérieure ou égale à 10 kPa.s/m : il est de préférence étanche à l'air de façon à procurer une bonne isolation acoustique. Un voile étanche a une résistance spécifique à l'écoulement d'air qui est infinie, c'est-à-dire qui est dans les limites de ce qui peut être mesuré. Le voile avant peut être peint pour améliorer l'esthétique du panneau côté face visible. Le voile avant peut être collé sur la face avant du panneau après un léger ponçage permettant d'aplanir celle-ci.

Le panneau en laine de verre comprend en outre un taux massique de liant compris entre 5% et 15% de la masse totale, de préférence entre 6% et 10% de la masse totale.

Le panneau en laine de verre présente une absorption acoustique α_{W} supérieure ou égale à 0,9. L'absorption acoustique est mesurée selon la norme ISO 354. L'indicateur α_{W} est ensuite calculé selon la norme ISO 11654. Dans toute la demande, les mesures ont été réalisées avec un plénum de 200 mm en hauteur de construction.

Le panneau en laine de verre présente une isolation acoustique D_{nfw} supérieure ou égale à 38 dB, de préférence supérieure ou égale à 39 dB, voire supérieure ou égale à 40 dB, ou encore supérieure ou égale à 41 dB, voire supérieure ou égale à 42 dB. L'isolation acoustique est mesurée selon la norme ISO 10848-1. L'indicateur D_{nfw} est ensuite calculé selon la norme ISO 717-1. Dans toute la demande, les mesures ont été réalisées avec un plénum de 700 mm en hauteur de construction.

Les mesures d'absorption et d'isolation acoustiques sont réalisées sur le panneau avec les voiles avant/arrière.

L'invention concerne également le procédé de fabrication du panneau en laine de verre tel que décrit plus haut. Le procédé comprend une étape de fabrication d'un mat de fibres de verre par centrifugation interne puis une étape de crêpage du mat de fibres de verre avec un taux de crêpage compris entre 1,5 et 5.

L'étape de fabrication du mat de fibres de verre par centrifugation interne est réalisée à l'aide d'une installation comportant :
∘ au moins un centrifugeur apte à tourner autour d'un axe X, notamment vertical, et dont la bande périphérique est percée d'une pluralité d'orifices pour délivrer des filaments d'un matériau fondu,
∘ un moyen d'étirage gazeux à haute température sous forme d'un brûleur annulaire qui assure l'étirage des filaments en fibres, et
∘ un tapis de réception associé à des moyens d'aspiration pour réceptionner les fibres.

Le ou les centrifugeurs, encore appelés assiettes de fibrage, permettent en effet de former des fibres minérales ou d'autres matériaux thermoplastiques, par un procédé de centrifugation interne associée à un étirage par un courant gazeux à haute température. La centrifugation interne s'applique notamment à la production industrielle de laine de verre destinée à entrer par exemple dans la composition de produits d'isolation thermique et/ou acoustique. Un filet de verre fondu est introduit dans chaque centrifugeur tournant à grande vitesse et percé à sa périphérie par un très grand nombre d'orifices par lesquels le verre est projeté sous forme de filaments sous l'effet de la force centrifuge. Ces filaments sont alors soumis à l'action d'un courant annulaire d'étirage à température et vitesse élevées longeant la paroi du centrifugeur, courant qui les amincit et les transforme en fibres. Les fibres formées sont entraînées par ce courant gazeux d'étirage vers un dispositif de réception généralement constitué par une bande perméable aux gaz, nommée tapis de réception.

Pendant l'étape de fabrication du mat de fibres de verre, une combinaison de paramètres est réglée parmi au moins :
∘ la viscosité du verre fondu, qui est comprise entre 820 et 1500 poise, de préférence entre 950 et 1200 poise,
∘ la pression du brûleur, comprise entre 200 et 1000 mm CE, de préférence entre 200 et 600 mm CE,
∘ la tirée totale de verre par jour et par centrifugeur, qui est comprise entre 14 tonnes/jour et 23 tonnes/jour, de préférence entre 17 et 22 tonnes/jour,
∘ le nombre de trous de chaque centrifugeur qui est compris entre 5000 et 40000, de préférence entre 15000 et 35000, et
∘ la vitesse de rotation du centrifugeur à une vitesse supérieure à 2000 tours/minute.

Ces paramètres permettent en particulier d'ajuster la densité et le micronaire du panneau en laine de verre.

De préférence, le diamètre des orifices de chaque centrifugeur est compris entre 0,5 et 1,1 mm. Chaque centrifugeur présente de préférence un diamètre compris entre 200 et 800 mm.

En outre, du liant est projeté sur les fibres de verre avant qu'elles ne tombent sur le tapis de réception, avec un taux compris entre 5% et 15% de la masse totale, de préférence entre 6% et 10% de la masse totale. Le mat de fibres de verre est ensuite passé en étuve, après le crêpage, afin de polymériser le liant.

Pour finaliser le produit, un voile est collé sur chacune des faces principales du panneau en laine de verre, les spécificités de chacun des voiles ayant été données plus haut.

Un premier exemple selon l'invention est un panneau en laine de verre de densité 117 kg/m³ et d'épaisseur de 50 mm, présentant une résistivité à l'écoulement d'air de 63 kPa.s/m² et un module d'Young de 2,3 MPa. Le micronaire est de 4,3/5g. Le taux de crêpage est de 3,5. Le panneau comporte un voile avant présentant une résistance spécifique à l'écoulement d'air de 0,3 kPa.s/m et un voile arrière étanche. L'absorption acoustique α_{W} est de 0,9 et l'isolation acoustique D_{nfw} est de 42 dB.

Un deuxième exemple selon l'invention est un panneau en laine de verre de densité de 102 kg/m³ et d'épaisseur 52 mm, présentant une résistivité à l'écoulement d'air de 68 kPa.s/m² et un module d'Young de 0,9 MPa. Le micronaire est de 3,6/5g. Le taux de crêpage est de 3,5. Le panneau comporte un voile avant présentant une résistance spécifique à l'écoulement d'air de 0,3 kPa.s/m et un voile arrière étanche. L'absorption acoustique α_{W} est de 0,95 et l'isolation acoustique D_{nfw} est de 41 dB.

Ainsi, des panneaux en laine de verre avec à la fois une bonne absorption acoustique et une bonne isolation acoustique ont pu être fabriqués.

## Revendications

1. Panneau en laine de verre destiné à être utilisé comme panneau acoustique et présentant :
- une densité inférieure ou égale à 130 kg/m³, de préférence inférieure ou égale à 120 kg/m³, voire inférieure ou égale à 110 kg/m³, ou encore inférieure ou égale à 100 kg/m³,
- une résistivité à l'écoulement d'air comprise entre 30 et 120 kPa.s/m², de préférence entre 50 et 110 kPa.s/m², voire entre 50 et 100 kPa.s/m², ou encore entre 50 et 90 kPa.s/m², voire entre 50 et 80 kPa.s/m², et
- un module d'Young compris entre 0,5 et 4 MPa, de préférence entre 0,8 et 4 MPa, de façon encore plus préférée entre 1,2 MPa et 4 MPa, voire entre 1,5 MPa et 4 MPa, ou encore entre 2 MPa et 4 MPa.

2. Panneau selon la revendication 1, présentant en outre un micronaire compris entre 2,5/5g et 6/5g, de préférence entre 3/5g et 6/5g, voire entre 3,5/5g et 6/5g, ou encore entre 4/5g et 5/5g.

3. Panneau selon la revendication 1 ou 2, présentant en outre une épaisseur supérieure ou égale à 25 mm, voire supérieure ou égale à 30 mm, de préférence supérieure ou égale à 35 mm, voire supérieure ou égale à 40 mm, ou encore supérieure ou égale à 45 mm.

4. Panneau selon l'une des revendications 1 à 3, comprenant en outre, sur chacune de ses faces principales, un voile.

5. Panneau selon l'une des revendications 1 à 4, dans lequel le voile destiné à être tourné du côté d'où provient le son à amortir ayant une résistance spécifique à l'écoulement d'air inférieure ou égale à 1 kPa.s/m, de préférence inférieure ou égale à 0,5 kPa.s/m, et le voile opposé ayant une résistance spécifique à l'écoulement d'air supérieure ou égale à 1 kPa.s/m, de préférence supérieure ou égal 5 kPa.s/m, voire supérieure ou égale à 10 kPa.s/m, ou encore étanche à l'air.

6. Panneau selon l'une des revendications 1 à 5, comprenant un taux massique de liant compris entre 5% et 15% de la masse totale, de préférence entre 6% et 10% de la masse totale.

7. Panneau selon l'une des revendications 1 à 6, présentant une absorption acoustique α_{W} supérieure ou égale à 0,9.

8. Panneau selon l'une des revendications 1 à 7, présentant une isolation acoustique D_{nfw} supérieure ou égale à 38 dB, de préférence supérieure ou égale à 39 dB, voire supérieure ou égale à 40 dB, ou encore supérieure ou égale à 41 dB, voire supérieure ou égale à 42 dB.

9. Procédé de fabrication du panneau en laine de verre selon l'une des revendications 1 à 8, comprenant les étapes suivantes :
- fabrication d'un mat de fibres de verre par centrifugation interne, à l'aide d'une installation comportant :
∘ au moins un centrifugeur apte à tourner autour d'un axe X, notamment vertical, et dont la bande périphérique est percée d'une pluralité d'orifices pour délivrer des filaments d'un matériau fondu,
∘ un moyen d'étirage gazeux à haute température sous forme d'un brûleur annulaire qui assure l'étirage des filaments en fibres, et
∘ un tapis de réception associé à des moyens d'aspiration pour réceptionner les fibres,
- crêpage du mat de fibres de verre avec un taux de crêpage compris entre 1,5 et 5, de préférence entre 2 et 5, voire entre 2,5 et 5, ou encore entre 3 et 5.

10. Procédé selon la revendication 9, dans lequel, pendant l'étape de fabrication du mat de fibres de verre, une combinaison de paramètres est réglée parmi au moins :
∘ la viscosité du verre fondu, qui est comprise entre 820 et 1500 poise, de préférence entre 950 et 1200 poise,
∘ la pression du brûleur, comprise entre 200 et 1000 mm CE, de préférence entre 200 et 600 mm CE,
∘ la tirée totale de verre par jour et par centrifugeur, qui est comprise entre 14 tonnes/jour et 23 tonnes/jour, de préférence entre 17 et 22 tonnes/jour,
∘ le nombre de trous de chaque centrifugeur qui est compris entre 5000 et 40000, de préférence entre 15000 et 35000, et
o la vitesse de rotation du centrifugeur à une vitesse supérieure à 2000 tours/minute.

11. Procédé selon la revendication 9 ou 10, dans lequel que le diamètre des orifices de chaque centrifugeur est compris entre 0,5 et 1,1 mm.

12. Procédé selon l'une des revendications 9 à 11, dans lequel chaque centrifugeur présente un diamètre compris entre 200 et 800 mm.

13. Procédé selon l'une des revendications 9 à 12, dans lequel du liant est projeté sur les fibres de verre avant qu'elles ne tombent sur le tapis de réception, avec un taux compris entre 5% et 15% de la masse totale, de préférence entre 6% et 10% de la masse totale, le mat de fibres de verre étant passé en étuve, de préférence après crêpage, afin de polymériser le liant.

14. Procédé selon l'une des revendications 9 à 13, dans lequel un voile est collé sur chacune des faces principales du panneau en laine de verre.
